# EUROPÄISCHE PATENTSCHRIFT

(11) **EP 3 558 731 B1**
(45) Veröffentlichungstag und Bekanntmachung des Hinweises auf die Patenterteilung: **08.12.2021**
(21) Anmeldenummer: 16816701.3
(22) Anmeldetag: 22.12.2016
(51) Int. Cl.: B60J 5/10, B62D 35/00

(54) **HECKTÜR VON AUFBAUTEN VON LKWS ODER LKW-ANHÄNGERN**
REAR DOOR OF BODIES OF LORRIES OR LORRY TRAILERS
PORTE ARRIÈRE DE CARROSSERIES DE POIDS LOURDS OU DE REMORQUES DE POIDS LOURDS

(43) Veröffentlichungstag der Anmeldung: 30.10.2019
(73) Patentinhaber: Schuh, Rainer Karl, 2700 Wiener Neustadt (AT)
(72) Erfinder: Schuh, Rainer Karl, 2700 Wiener Neustadt (AT)
(74) Vertreter: Patentanwälte Barger, Piso & Partner
(86) Internationale Anmeldenummer: PCT/EP2016/082364
(87) Internationale Veröffentlichungsnummer: WO 2018/113971

(56) Entgegenhaltungen:
- CA-A- 1 155 475
- DE-A1- 10 353 885
- DE-A1-102011 122 299
- US-A- 3 802 103
- US-A1- 2012 303 458

## Beschreibung

Die Erfindung betrifft die Hecktür von Aufbauten von LKWs oder LKW-Anhängern entsprechend dem Oberbegriff des Anspruches 1 und der DE 103 53 885 A1.

Diese Druckschrift offenbart eine Hecktür für einen LKW, die entlang vertikaler Schwenkachsen zumindest zweigeteilt ist. Bei der zweiteiligen Ausführung ist ein erster Flügel am Koffer angeschlagen und der zweite am freien Ende des ersten. Dieser zweite Flügel reicht bis zum gegenüber liegenden Rand des Portals und wird für die Fahrt dort passend fixiert. Zum Öffnen wird entweder zuerst der zweite Flügel um 180° an den ersten angelegt und dann werden beide um 270° umgeschlagen, oder es werden simultan der erste um den Koffer und der zweite im Gegensinn um den ersten geschlagen, wodurch hinter dem Koffer weniger Platz gebraucht wird. Bei drei oder mehr Teilen ist ein Ziehharmonika-artiges Öffnen vorgesehen. Jedenfalls befinden sich beim Fahrbetrieb beide Flügel nebeneinander.

Bei den meisten LKW-Aufbauten bzw. Aufbauten von LKW-Anhängern aller Art, in Folge wird diese Unterscheidung nur mehr dort getroffen, wo es technisch sinnvoll ist, da sich diese beiden Gegenstände, soweit die Erfindung betroffen ist, nicht voneinander unterscheiden; ist eine zweiflügelige Tür vorgesehen, wobei jedes der beiden Türblätter von der geschlossenen Position um eine oder zwei (Doppelgelenkscharnier) vertikale Achsen im Bereich der vertikalen hinteren Kante des Aufbaus um 270° gedreht werden kann, bis sie an der Außenseite der Längswand des Aufbaus zumindest im Wesentlichen anliegt, was den Zugang ins Innere des Aufbaus auf bestmögliche Weise gestattet. Dabei werden in vielen Fällen die beiden Türblätter durch eine sogenannte Drehstangenverriegelung in ihrer geschlossenen Position fixiert.

Derartige Aufbauten und Türen haben sich millionenfach bewährt, weisen aber doch Unzulänglichkeiten auf:
Erstens stellen die Außenflächen solcher Aufbauten ideale Werbeflächen dar, die Seitenwände werden diesbezüglich bereits durch aufgezogene Planen mit entsprechendem Aufdruck vielfach durchgehend benutzt, aber die für den nachfolgenden Verkehr besonders relevanten Heckflächen der Türblätter sind durch die Scharniere und Beschläge de facto nicht benutzbar.

Zweites ist es beim Betrieb von LKWs, insbesondere beim Fahren im Überlandverkehr so, dass ein wesentlicher Luftwiderstand der zu überwinden ist und daher viel Treibstoff erfordert, durch die Totluft hinter dem Heck des Fahrzeuges entsteht, diese Totluft wird wie ein Sack nachgeschliffen. Dieser Effekt ist dem Bodensog bei Projektilen ähnlich, und ist ähnlich hinderlich und unangenehm. Um hier den Treibstoffverbrauch zu reduzieren, ist es in verschiedenen Ländern seit kurzem erlaubt, an den vertikalen Seitenkanten des Aufbaus im Heckbereich Leitflügel oder dgl. vorzusehen, durch die dieser Effekt verringert wird. Es stellen nun diese Leitflügel, die im Bereich der Gelenke der Hecktürblätter angeordnet sind, ein großes Hindernis für die Beweglichkeit der Hecktürblätter dar und es besteht ein großer Bedarf, dieses Problem zu beseitigen. Drittens besteht ein Bedarf, Informationen, Warnhinweise, Beleuchtungseinrichtungen, Rückfahrscheinwerfer, Schmutzfänger, Kameras, Näherungssensoren, Leitern, und vieles mehr in beliebiger Kombination im Heckbereich des Aufbaus vorzusehen, ohne am Aufbau die entsprechenden Änderungen und Anbauten vornehmen zu müssen.

Die Erfindung hat das Ziel, eine Lösung für diese Probleme, sowohl einzeln, als auch in Kombination, anzugeben.

Die Erfindung erreicht dieses Ziel durch die im kennzeichnenden Teil des Anspruches 1 angegebenen Merkmale. Mit anderen Worten, es wird am Türblatt, in Zukunft wird nur von einem gesprochen, an vertikalen Gelenken bzw. Scharnieren, die bevorzugt im Bereich der Hauptschließkante des Türblatts, im gezeigten Beispiel übereinstimmend mit der Fahrzeugmittelebene, entsprechend vorgesehen sind, ein Tragrahmen angelenkt, dessen Umriss zumindest einen Teil des Türblattes abdeckt, und der im Bereich der vertikalen, hinteren Eckkante des Aufbaus mit diesem und/oder dem Türblatt verbindbar bzw. fixierbar ist. Darüber hinaus ist am Tragrahmen an seiner freien vertikalen Kante über zumindest einen Teil seiner Höhe ein Vorsprung ausgebildet, der im geschlossenen, fahrbereiten Zustand der Hecktür, im Bereich der Türachse, in eine dazu kongruente, nutförmige Vertiefung am Aufbau oder einem damit verbundenen Bauteil eingreift.

Dies ermöglicht es, dass im Zuge des normalen Schließens der Tür der Tragrahmen fest mit dieser verbunden wird, ohne dass dazu eine eigene, spezielle Tätigkeit vorzunehmen ist. Diese Maßnahme macht den Tragrahmen erst richtig praktikabel, da im stressigen Lieferbetrieb zusätzlich notwendige Tätigkeiten und Handgriffe auf hartnäckigen Widerstand der betroffenen Benutzer stoßen und zu Unterlassungen und damit Sicherheitsproblemen verführen. Es wird das endgültige Schließen und Verriegeln durch die übliche Drehstangenverriegelung allein, ohne zusätzliche Bauteile, erreicht.

Es kann dieser Tragrahmen sowohl einen Leitflügel, fix befestigt oder gegenüber dem Tragrahmen um zumindest eine vertikale Achse drehbar und fixierbar, vorgesehen sein, es kann unabhängig davon im Dachbereich ein horizontaler Leitflügel, der die saubere Luft von oben nach unten leitet, vorgesehen sein, und unabhängig davon kann am Tragrahmen ein Spannrahmen für eine Plane, die gegebenenfalls Informationen oder Werbung aufgedruckt hat, befestigt werden, es kann auch ein entsprechendes Paneel vorgesehen sein. Es kann bzw. können am Tragrahmen auch Gegenstände wie Informationsträger aller Art, Warnhinweise, Beleuchtungseinrichtungen, Rückfahrscheinwerfer, Schmutzfänger, Kameras, Näherungssensoren, Leitern, Rückfahrkameras, Warnleuchten und ähnliches mehr befestigt werden.

Die Erfindung wir im Folgenden anhand der Zeichnung näher erläutert und beschrieben, ohne darauf beschränkt zu sein. Dabei zeigt bzw. zeigen
die Fig. 1 eine perspektivische Ansicht eines erfindungsgemäß ausgebildeten Hecks, links mit Plane, rechts mit Leitflügel,
die Fig. 2 eine Draufsicht auf den in Fahrtrichtung gesehen rechten Eckbereich,
die Figs 3 und 4 zwei Horizontalschnitte in diesem Eckbereich, vergrößert,
die Fig. 5 einen schematischen Horizontalschnitt bei einer teilweise geöffneten Tür,
die Fig. 6 eine Ansicht wie Fig. 2 bei weiter geöffneter Tür,
die Fig. 7 eine Ansicht wie Fig. 7 bei vollständig geöffneter Tür
die Fig. 8 eine Variante in einer Ansicht ähnlich der Fig. 2,
die Fig. 9 die Variante der Fig. 8 in vollständig geöffneter Position,
die Figs. 10-11 eine Ausgestaltung der Variante in Ansichten ähnlich den Figs. 8-9.

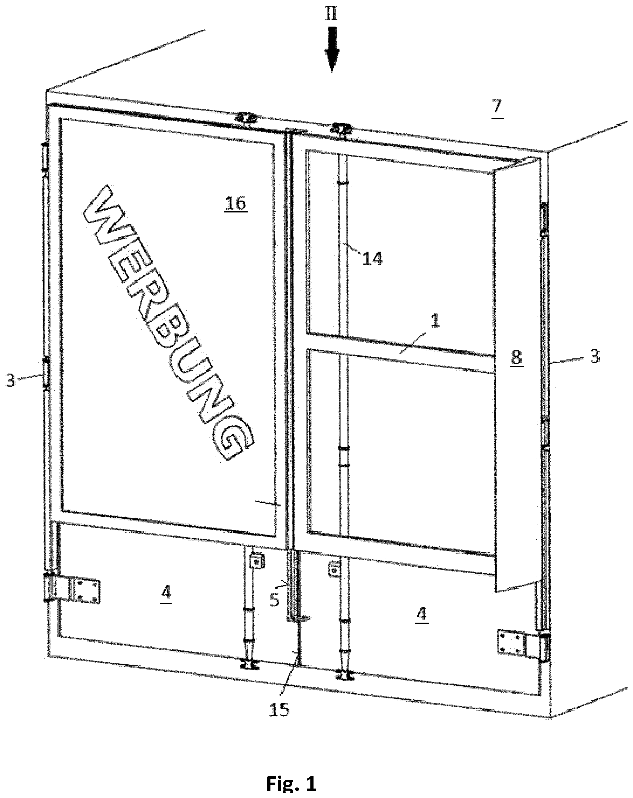

Die Fig. 1 zeigt eine schematische Heckansicht, aus der der Gesamtaufbau einer erfindungsgemäßen Tür hervorgeht: An einem Aufbau 7 sind zwei Türblätter 4 um zugeordnete Türachsen 3, die auch Doppelgelenkscharniere sein können, schwenkbar angelenkt. Diese Türblätter 4 werden mittels Verschlüssen, in den meisten Fällen Drehstangenverriegelungen 14 in ihrer geschlossenen Lage gehalten. Erfindungsgemäß sind, bevorzugt wie abgebildet im Bereich der Hauptschließkanten 15 der beiden Türblätter 4 vertikal verlaufende Rahmenachsen 5 angeordnet, um die schwenkbar jeweils ein Tragrahmen 1 angelenkt ist.

Diese Tragrahmen 1 können nun beispielsweise, wie in Fig. 1 der rechte Tragrahmen, einen Leitflügel 8 zur Verringerung des Hecksoges tragen oder, wie der linke Tragrahmen, eine Plane 16, die auf einem eigenen oder im Tragrahmen 1 integrierten Spannrahmen aufgespannt ist. Natürlich können auf diesem Tragrahmen auch die oben genannten Zubehörteile montiert werden, ohne dass am Aufbau zusätzliche Armaturen oder Beschläge od.dgl. montiert werden müssten.

Wie aus der Darstellung der Fig. 1 gut zu sehen ist, können diese beiden Maßnahmen unabhängig voneinander und daher auch in Kombination ergriffen werden. Der Tragrahmen1 deckt vorzugsweise nicht die gesamte Heckfläche oder Türblattfläche ab, sondern reicht bis etwas über die Beschläge 17 des Verschlusses der Türe, um deren Öffnen und Schließen nicht zu komplizieren. Die Ausbildung und vertikale Erstreckung des Leitflügels 8 kann in weiten Grenzen frei gewählt werden.

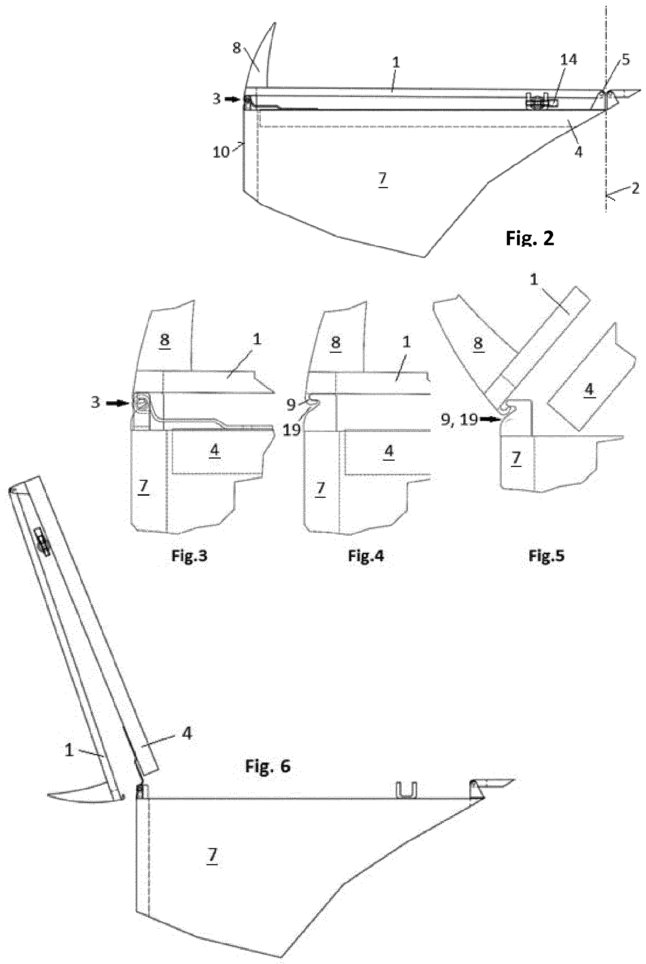

Die Fig. 2 zeigt eine schematische Ansicht in Richtung des Pfeiles II der Fig. 1: An einem um die Achse bzw. Doppelachse 3 am Aufbau 7 schwenkbar befestigten Türblatt 4 ist im Bereich der strichpunktiert eingezeichneten, vertikalen Fahrzeugmittelebene 2, die hier mit der Hauptschließkante des Türblattes 4 zusammenfällt, um die vertikale Rahmenachse 5 drehbar der Tragrahmen 1 angelenkt. Der Spalt zwischen Türblatt 4 und Tragrahmen 1 ist gut ersichtlich, ebenso die "Unterbringung" der Drehstangenverriegelung 14, die dadurch möglich wird.

Im Bereich der vertikalen Achse 3, somit im Bereich des äußeren Randes des Aufbaus 7, ist am Tragrahmen 1 der in vertikaler Richtung verlaufende Leitflügel 8 vorgesehen, der bei der in Figs. 1 und 2 dargestellten Betriebslage Luft vom Außenbereich des Fahrzeuges zur Mittelebene 2 hin leitet und so den schädlichen Bodensog (eigentlich Hecksog) verringert.

In den Figs. 3-4 sind zwei Horizontalschnitte durch den Bereich der Achse 3 in unterschiedlicher Höhe dargestellt: Fig. 3 zeigt den Schamierbereich in einer bevorzugten Ausführungsform, Fig. 4 einen weiteren Bereich, aus dem die automatische Verriegelung zwischen Türblatt 4 und Tragrahmen 1, die eine bevorzugte Ausgestaltung der Erfindung betrifft, hervorgeht: Am Tragrahmen 1 ist ein Vorsprung 9 vorgesehen, der in Verriegelungslage in eine quasi kongruente, (im technischen Sinn, nicht im streng mathematischen) nutartige Vertiefung 19 am Aufbau 7 bzw. einem daran befestigten Bauteil eingreift. Zufolge der gekrümmten Ausführung der beiden kooperierenden Elemente 9, 19, wird der Tragrahmen 1 formschlüssig gehalten, ohne dass eine aktive Tätigkeit des Benutzers notwendig wäre.

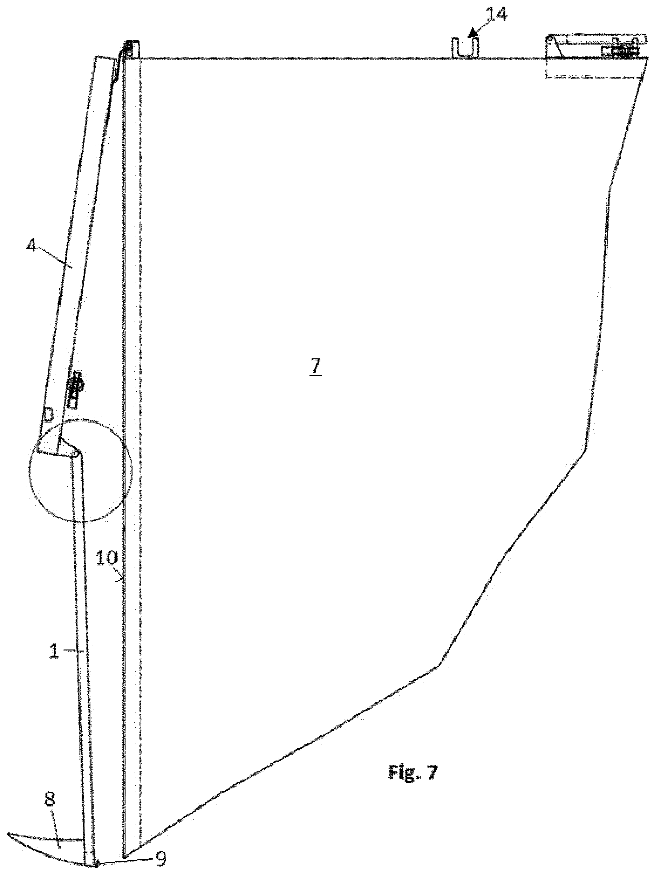

Die Fig. 5 zeigt, wie beim Öffnen des Türblattes 4 mit dem Rahmen 1 um die Achse 3 die beiden kooperierenden Elemente 9, 19 sukzessive außer Eingriff kommen; die Fig. 6 zeigt die endgültige Trennung in diesem Bereich, die Fig. 7 die Endlage entlang der seitlichen Außenwand 10, es kommt somit beim Öffnen der Türe von selbst zum Trennen des Tragrahmens vom Türblatt, was das vollständige Öffnen leicht und unkompliziert macht.

Aus den Figs. 3-5 ist auch die Form des Vorsprunges 9 und der nutförmigen Vertiefung 19 gut ersichtlich: Der Vorsprung 9 ist hakenförmig, die "Spitze" des Hakens ist (in der Betriebslage) zur Fahrzeugmittelebene hin gerichtet. Die Nut ist V-förmig und, wegen der mechanischen Stabilität und dem leichteren Einführen des Vorsprunges, asymmetrisch, mit der Öffnung (in der Betriebslage) von der Fahrzeugmittelebene weg gerichtet und mit der dem Aufbau 7 abgewandten Flanke etwa parallel zur Türblattebene verlaufend.

Im dargestellten Ausführungsbeispiel nicht dargestellt sind gegebenenfalls vorgesehene Anschläge zwischen dem Rahmen 1 und der Außenseite des Türblatts 4, die zur mechanischen Stabilisierung und zum Verhindern von Flattern und Vibrieren, besonders bei der Variante mit einer Plane, dienen und die auch weggelassen werden können, je nach der Stabilität und dem Aufbau der Konstruktion.

Die Form und Montage und Ausbildung des Leitflügels 8 ist ebenfalls rein schematisch dargestellt, er kann aus den unterschiedlichsten Materialien bestehen und ist daher als eigener Bauteil eingezeichnet, was nicht so sein muss, er kann unter Umständen auch einstückig mit dem Tragrahmen 1 hergestellt werden, er kann über die Höhe unterschiedlich ausgebildet sein oder Unterbrechungen oder Verjüngungen für Beschläge aller Art aufweisen, wie dies in Fig. 1 angedeutet ist.

Wie bereits erwähnt kann unabhängig von diesem Leitflügel ein ähnlich ausgebildeter Leitflügel in horizontaler Richtung im oberen Bereich des Tragrahmens 1 angeordnet werden, der Luft vom Bereich oberhalb des Daches des Aufbaus nach unten leitet und so zur Verringerung des Hecksoges und zur Reinigung aller bestrichenen Oberflächen beiträgt.

Der Form und die Größe des Vorsprungs 9 und daher auch der Nut 19, in die er in der in Fig. 4 dargestellten Position eingreift, kann verschiedentlich variiert werden, es ist auch möglich, auf den Vorsprung 9 in dieser Form zu verzichten, solange dabei die quasi selbsttätige Fixierung, die beim Öffnen eine praktische Abfolge der Bewegungen verlangt und beim Schließen die Fixierung selbsttätig bewirkt, erreicht wird, wie beispielsweise durch die Hakenleiste 12. In manchen Fällen möglich und unter Umständen vorteilhaft ist eine nicht dargestellte Anordnung einer elastisch deformierbaren Nut im Bereich des Aufbaus 7, der in Fig. 7, ganz unten, dargestellt ist, in die der Vorsprung 9 eingeschnappt werden kann, um das Türblatt in der offenen Position zu fixieren.

Der Vorsprung 9 kann sich über die gesamte Höhe des Aufbaus 7 erstrecken oder aber nur in Teilabschnitten der Höhe ausgebildet sein, dies hängt von der angestrebten mechanischen Festigkeit der Fixierung und den zur Verfügung stehenden räumlichen Gegebenheiten ab, da verschiedene Aufbauten hier verschiedene Maßnahmen ermöglichen oder erfordern.

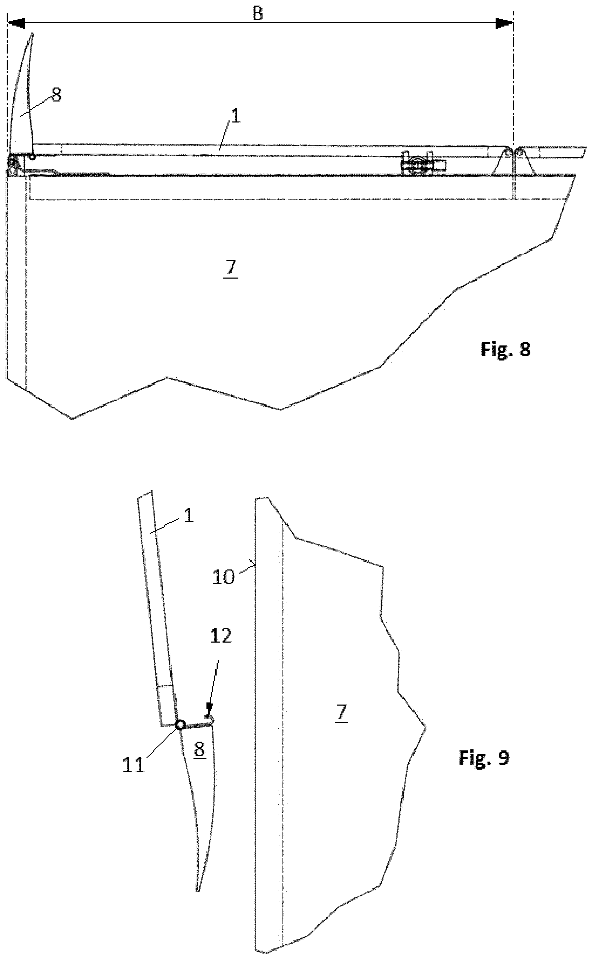

Eine Variante der Ausführungsform nach den Figs 1 bis 7 ist in Fig. 8 und 9 dargestellt. Hier ist der Leitflügel 8 am Tragrahmen 1 um eine Flügelachse 11 drehbar montiert und kann daher bei der in Fig. 9 dargestellten Position bei vollständiger Öffnung der Türe so umgelegt werden, dass er nicht von der Fahrzeugseitenwand 10 nach Außen vorspringt. Um dennoch eine selbsttätige mechanische Fixierung des Tragrahmens 1 in der vollständig geschlossenen Lage zu erhalten, ist am Flügel 8 der Vorsprung 9 in Form einer Hakenleiste 12 ausgebildet, die bezüglich des Tragrahmens 1 stets die in Fig. 9 dargestellte Position aufweist und, wie aus Fig. 6 ersichtlich ist, in eine Ausnehmung (ohne Bezugszeichen) des Aufbaus 7 eingreift, so wie der Vorsprung 9 in seine Gegennut 19. Im Betrieb wird der Leitflügel 8 durch das Aufliegen seiner Stirnfläche auf einen entsprechenden Rahmenbereich in seiner Arbeitsposition gehalten.

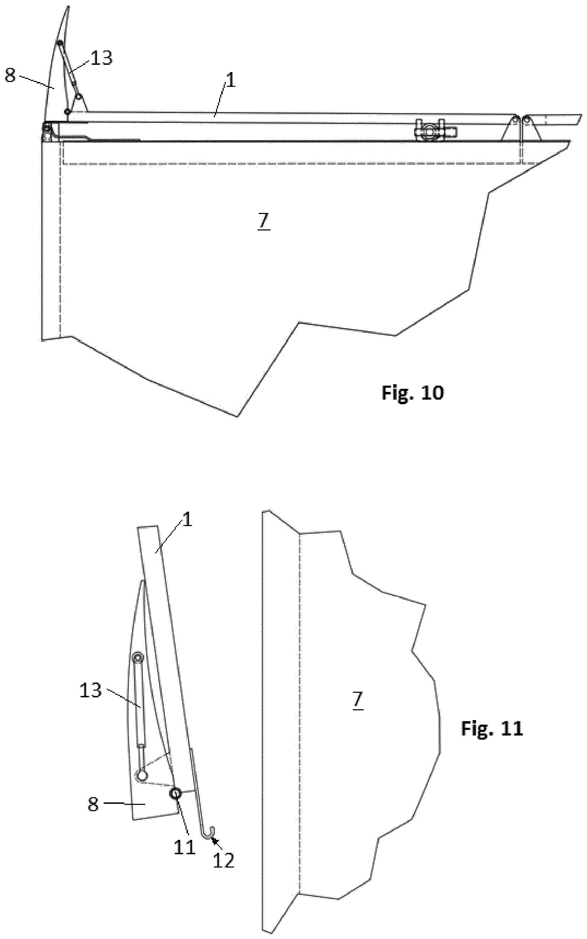

Die Ausführungsform nach Fig. 10 und 11 hat als Besonderheit, dass der Leitflügel 8 aktiv, beispielsweise durch eine Gasfeder 13 stabil in eine von zwei Endlagen bei der Drehung um seine Flügelachse 11 nach Art eines Über-Totpunkt-Mechanismus kraftschlüssig gehalten wird, und dass er nicht wie bei der Variante gemäß den Figs. 8-9 in eine gestreckte Lage gebracht wird, sondern mit seiner freien Kante an das Türblatt heran gezogen wird. Auch hier ist wiederum ein Vorsprung in Form einer Hakenleiste 12 vorgesehen, die die mechanische Fixierung in der Betriebslage bewirkt. Statt der Gasfeder 13 kann zum aktiven Betrieb eine hydraulische oder pneumatische Kolben-Zylinder-Einheit mit den entsprechenden Fluidleitungen und Steuerorganen vorgesehen sein.

Der Tragrahmen 1 erstreckt sich bevorzugt, wie dargestellt, in waagrechter Richtung von der Hauptschließkante im Wesentlichen bis zur seitlichen Außenwand 10. Dabei bedeutet "im Wesentlichen" mindestens 80% und bevorzugt mindestens 90% des Abstandes B zwischen der Hauptschließkante und der seitlichen Außenwand 10, wie sie in Fig. 8 eingezeichnet ist.

Es ist in Sonderfällen möglich, die Rahmenachse 5 aus dem Bereich der Hauptschließkante nach außen zu verlegen und die horizontale Erstreckung des Tragrahmens entsprechend zu verkleinern. Dabei wird zwar die Nutzbarkeit als Werbeträger verringert, aber die anderen einsatzgebiete bleiben unbeeinträchtigt. Als Untergrenze ist dabei eine horizontale Erstreckung von 50% des Abstandes B anzusehen, da dann der Tragrahmen beim Öffnen nicht mehr an der Hauptschließkante vorbeikommt.

Die Erfindung ist nicht auf die beschriebenen und dargestellten Beispiele beschränkt, sondern kann verschiedentlich abgewandelt, variiert und ergänzt werden.

Wie bereits ausgeführt, wurde auf die Darstellung und Beschreibung von Anschlägen, Sicherheitselementen, Schlössern, Sperren, Verriegelungen und dgl. verzichtet, da sie dem Fachmann in Kenntnis der Erfindung geläufig und in ihrer Anwendung und ihrem Aufbau klar sind. Es soll nur darauf verwiesen werden, dass beispielsweise, wie bereits erwähnt, die Drehachsen 3 und 5 in Form von Doppelgelenksscharnieren ausgebildet werden können und dass derartige Varianten und Äquivalente an sich dem Fachmann geläufig sind und in Kenntnis der Erfindung leicht eingesetzt werden können. Die Türblätter müssen nicht gleiche Breite aufweisen, es sind asymmetrische Ausbildungen aus dem Stand der Technik bekannt, es wird dann die Breite der Tragrahmen an die jeweilige Türblattbreite angepasst.

Der Vorsprung 9 und sein Gegenstück, die Nut 19 können in gewissem Rahmen an anderer Stelle als dargestellt vorgesehen werden, in Kenntnis der Öffnungsbewegung des Türblattes 4, somit der verwendeten Scharniere und der Erfindung, kann der Fachmann leicht feststellen, welche geometrischen Bereiche dafür in Frage kommen.

Die endgültige Verriegelung erfolgt, wie eingangs erwähnt, so wie bisher nach dem Schließen der Tür mittels der Drehstangenverriegelung oder anderer aus dem Stand der Technik bekannter Schließmechanismen. Die erfindungsgemäße Konstruktion kann nachträglich an so gut wie allen bekannten Türen montiert werden, sie kann als Bausatz, sowohl für die nachträgliche Montage wie für die Neuausrüstung vorgefertigt und ausgeliefert werden.

Die Materialien, die verwendet werden können sind vielfältig, ob das Türblatt 4 aus einem Panel besteht oder aus einem thermisch isolierten Panel spielt keine Rolle, ob der Tragrahmen 1 an seiner Außenseite einen Spannrahmen für eine Plane aufweist, die zu Werbezwecken verwendet werden kann oder einen solchen Spannrahmen integriert hat oder überhaupt keinen solchen Spannrahmenaufweist, hat keinen Einfluss auf den Kern der Erfindung und soll daher hier nur kurz erwähnt werden. Für den Tragrahmen 1 werden Aluminiumprofile bevorzugt, auch Metall-Kunststoff-Verbunde sind möglich, dies hängt von den auftretenden Kräften und damit auch von den Abmessungen der bewegten Teile ab, unter Umständen können auch Stahlprofile, insbesondere aus rostfreiem Stahl, verwendet werden. Auch eine Ausbildung oder Beplankung mit einem Paneel ist möglich.

Die Ausbildung der Gelenke bzw. Scharniere oder Achslagerungen für die verschiedenen erläuterten und beschriebenen Drehachsen entsprechen im Wesentlichen von ihren Belastung und Abmessungen her, den beim LKW Bau bereits bekannten Achsen, Lagern und Gelenken und bedürfen daher hier auch keiner weiteren Erläuterung.

Der Verlauf über die Höhe aller diesbezüglicher Teile kann von Fall zu Fall verschieden sein, es kann der Leitflügel Ausnehmungen aufweisen, um Platz für Halterungen, Scharniere, Betätigungselemente, Verschlüsse, etc. zu lassen oder mehrteilig ausgeführt sein, etc., all diese Dinge sind in der Zeichnung nicht oder nur schematisch dargestellt, weil sie den Kern der Erfindung nicht berühren und vom Fachmann in Kenntnis der Erfindung leicht vorgesehen und dimensioniert werden können.

**Bezugszeichenliste:**

| | | | |
|---|---|---|---|
| 01 | Tragrahmen | 11 | Flügelachse |
| 02 | Mittelebene | 12 | Hakenleiste |
| 03 | vertikale Türachse | 13 | Gasfeder |
| 04 | Türblatt | 14 | Drehstangenverriegelung |
| 05 | vertikale Rahmenachse | 15 | Hauptschließkante |
| 06 | leer | 16 | Plane |
| 07 | Aufbau | 17 | Beschläge |
| 08 | Leitflügel | 18 | leer |
| 09 | Vorsprung | 19 | nutartige Vertiefung |
| 10 | seitliche Außenwand | | |

## Patentansprüche

1. Hecktür von Aufbauten (7) von LKWs oder LKW-Anhängern, mit zumindest einem Türblatt (4), das um zumindest eine im Eckbereich des Aufbaus (7) vorgesehene vertikale Türachse (3) schwenkbar am Aufbau (7) angelenkt ist, wobei, bevorzugt im Bereich der Hauptschließkante des Türblattes (4), ein Tragrahmen (1) um eine vertikale Rahmenachse (5) schwenkbar angelenkt ist, der sich in waagrechter Richtung im Wesentlichen bis zur seitlichen Außenwand (10) erstreckt, und in diesem seitlichen Bereich über zumindest einen Teil seiner Höhe ein Vorsprung (9) ausgebildet ist, der im geschlossenen, fahrbereiten Zustand der Hecktür in eine dazu kongruente, nutförmige Vertiefung (19) am Aufbau (7) oder einem damit verbundenen Bauteil eingreift, **dadurch gekennzeichnet, dass** die Vertiefung (19) im Bereich der Türachse (3) vorgesehen ist.

2. Hecktür nach Anspruch 1, **dadurch gekennzeichnet, dass** der Tragrahmen (1) im Bereich des Vorsprunges (9) mit einem vertikal verlaufenden Leitflügel (8) und/oder mit einem Spannrahmen für eine Plane (16) und/oder mit Tragvorrichtungen für Zubehör versehen oder ausgebildet ist.

3. Hecktür nach Anspruche 2, **dadurch gekennzeichnet, dass** der Leitflügel (8) um eine vertikale Flügelachse (11) bezüglich des Tragrahmens (1) schwenkbar gelagert ist.

4. Hecktür nach Anspruch 3, **dadurch gekennzeichnet, dass** der Leitflügel (8) mittels einer Gasdruckfeder (13) wahlweise in einer seiner beiden Endlagen der Drehung um seine Flügelachse (11) gehalten wird.

5. Hecktür nach Anspruch 3, **dadurch gekennzeichnet, dass** der Leitflügel (8) mittels eines Stelltriebes, bevorzugt einer hydraulischen oder pneumatischen Zylinder-Kolben-Einheit um die Flügelachse (11) verstellbar ist.

6. Hecktür nach Anspruch 2, **dadurch gekennzeichnet, dass** das Zubehör aus der Gruppe, bestehend aus Informationsschildern, Warnhinweisen, Arbeitsscheinwerfern, Leitern, Leuchten, Unterfahrschutzvorrichtungen, Informationen aller Art, Warnhinweisen, Beleuchtungseinrichtungen, Rückfahrscheinwerfern, Schmutzfängern, Näherungssensoren, Rückfahrkameras und Warnleuchten, ausgewählt ist.

7. Hecktür nach einem der voranstehenden Ansprüche, **dadurch gekennzeichnet, dass** der Querschnitt des Vorsprunges (9) hakenförmig ist und der Querschnitt der Nut (19) V-förmig.

8. Hecktür nach einem der voranstehenden Ansprüche, **dadurch gekennzeichnet, dass** die Vertiefung (19) parallel zur Türachse (3) verläuft.

## Claims

1. Rear door of bodies (7) of trucks or truck trailers, having at least one door leaf (4) which is hinged to the body (7) so as to be pivotable about at least one vertical door shaft (3) provided in the corner region of the body (7), with a support frame (1) being pivotably hinged about a vertical frame shaft (5), preferably in the region of the main closing edge of the door leaf (4), which frame extends in the horizontal direction substantially to the lateral outer wall (10), and, in this lateral region, a projection (9) being formed over at least a part of the height of said region, which projection, when the rear door is closed and in running order, engages in a congruent, groove-shaped recess (19) on the body (7) or a component connected thereto, **characterised in that** the recess (19) is provided in the region of the door shaft (3).

2. Rear door according to claim 1, **characterised in that** the support frame (1) is, in the region of the projection (9), provided or formed with a vertically extending guide vane (8) and/or with a tensioning frame for a tarpaulin (16) and/or with support devices for accessories.

3. Rear door according to claim 2, **characterised in that** the guide vane (8) is mounted so as to be pivotable about a vertical vane shaft (11) with respect to the support frame (1).

4. Rear door according to claim 3, **characterised in that** the guide vane (8) is optionally held in one of its two end positions of rotation about its vane shaft (11) by means of a gas spring (13).

5. Rear door according to claim 3, **characterised in that** the guide vane (8) can be adjusted about the vane shaft (11) by means of an actuator, preferably a hydraulic or pneumatic cylinder-piston unit.

6. Rear door according to claim 2, **characterised in that** the accessories are selected from the group consisting of information signs, warning notices, work lights, ladders, lights, underride guard devices, information of all kinds, warning notices, lighting equipment, reversing lights, mudflaps, proximity sensors, reversing cameras and warning lights.

7. Rear door according to any of the preceding claims, **characterised in that** the cross section of the projection (9) is hook-shaped and the cross section of the groove (19) is V-shaped.

8. Rear door according to any of the preceding claims, **characterised in that** the recess (19) runs parallel to the door shaft (3).

## Revendications

1. Porte arrière pour des superstructures (7) de camions ou de remorques de camions, avec au moins un vantail de porte (4), qui est susceptible de pivoter sur la superstructure (7) sur au moins un axe de porte vertical (3) prévu dans la zone d'angle de la superstructure (7) dans laquelle, de préférence dans la zone du bord de fermeture principal du vantail de la porte (4), un cadre de support (1) est susceptible de pivoter autour d'un axe de cadre vertical (5), qui s'étend dans le sens horizontal essentiellement jusqu'à la paroi extérieure latérale (10), et dans cette zone latérale sur au moins une partie de sa hauteur, une saillie (9) est formée, qui, à l'état fermé et prêt à conduire de la porte arrière, vient en prise dans un évidement en forme de rainure (19) congruent avec celle-ci, sur la superstructure (7) ou dans un composant reliée à celle-ci, **caractérisé en ce que** l'évidement (19) est prévu dans la zone de l'axe de la porte (3).

2. Porte arrière selon la revendication 1, **caractérisée en ce que** le cadre de support (1) dans la zone de la saillie (9) est muni d'une aile de guidage verticale (8) et/ou d'un cadre de tension pour une bâche (16) et/ou de dispositifs de support pour accessoires, ou est formé avec ceux-ci.

3. Porte arrière selon la revendication 2, **caractérisée en ce que** l'aile de guidage (8) est montée de façon pivotante autour d'un axe d'aile vertical (11) par rapport au cadre de support (1).

4. Porte arrière selon la revendication 3, **caractérisée en ce que** l'aile de guidage (8) est maintenue au moyen d'un ressort à gaz (13) sélectivement dans l'une de ses deux positions d'extrémité de rotation autour de son axe d'aile (11).

5. Porte arrière selon la revendication 3, **caractérisée en ce que** l'aile de guidage (8) est réglable au moyen d'un actionneur, de préférence une unité hydraulique ou pneumatique cylindre-piston autour de l'axe de l'aile (11).

6. Porte arrière selon la revendication 2, **caractérisée en ce que** les accessoires sont choisis dans le groupe composé de panneaux d'information, avertissements, feux de travail, échelles, luminaires, dispositifs de protection contre l'encastrage, informations de tout type, messages d'avertissement, dispositifs d'éclairage, feux de recul, crépines, capteurs de proximité, caméras de recul et feux d'avertissement.

7. Porte arrière selon l'une quelconque des revendications précédentes, **caractérisée en ce que** la section transversale de la saillie (9) est en forme de crochet et la section transversale de la rainure (19) en forme de V.

8. Porte arrière selon l'une des revendications précédentes, **caractérisée en ce que** l'évidement (19) est parallèle à l'axe de la porte (3).
